(19) Europäisches Patentamt European Patent Office Office européen des brevets

(11) **EP 4 277 197 A1**

(12) **EUROPEAN PATENT APPLICATION**

(43) Date of publication:
**15.11.2023   Bulletin 2023/46**

(21) Application number: **22172489.1**

(22) Date of filing: **10.05.2022**

(51) International Patent Classification (IPC):
**H04L 9/08** (2006.01)    **H04B 10/70** (2013.01)

(52) Cooperative Patent Classification (CPC):
**H04L 9/0858; H04B 10/70**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fraunhofer-Gesellschaft zur Förderung
der angewandten Forschung e.V.
80686 München (DE)**

(72) Inventors:
• **Marques Muniz, André Luiz
07743 Jena (DE)**
• **González Martín del Ca, Luis Javier
07747 Jena (DE)**
• **Tangarife Villamizar, Nicolas Eduardo
07747 Jena (DE)**
• **Steinlechner, Fabian
07745 Jena (DE)**

(74) Representative: **Louis Pöhlau Lohrentz
Patentanwälte
Merianstrasse 26
90409 Nürnberg (DE)**

(54) **QUANTUM KEY DISTRIBUTION FOR QUANTUM SECRET SHARING**

(57)     It is claimed a method for quantum key distribution for quantum secret sharing, comprising an entangled photon source (2) and two receivers, comprising the steps
i) generation of time-energy entangled photon pairs in an entangled photon source (2), whereby the source (2) comprises a laser (20) and a non-linear element (22), whereby each entangled photon pair comprises a signal photon and an idler photon;
ii) transmission of the signal photons to a first receiver (3) and the idler photons to a second receiver (4);
iii) measurement of the signal and idler photons in an unbalanced Mach-Zehnder interferometer (30) or an unbalanced Michelson interferometer at each receiver and generation of a key.

According to the invention, the generation of the time-energy entangled photon pairs in step i) is phase modulated, and/or the measurement of the time-energy entangled photon pairs in step ii) at the first receiver (3) and/or the second receiver (4) is phase modulated.

*Fig. 1*

EP 4 277 197 A1

**Description**

The present invention provides a method for quantum key distribution for quantum secret sharing according to the preamble of claim 1 and a system for quantum key distribution for quantum secret sharing according to the preamble of claim 14.

Entangled photons are used in known systems for the generation of a key at two distance receivers, called quantum key distribution (QKD). Quantum key distribution (QKD) has been proposed to ensure a secured point-to-point communication. The security provided by quantum key distribution protocols is harnessed to the laws of quantum physics and thus independent of all future advances of algorithm or computational power.

In known quantum key distribution application, the source emits entangled photon pairs in one state. For a quantum key distribution protocol with a single state, only the two receivers of the photons, commonly known as Alice and Bob, have to communicate in order to generate a key. However, some advance quantum key distribution protocols use an active modulation of the entangled state emitted by the source, so called quantum secret sharing (QSS), thus, in order to generate a key, the source must be a part of the communication. In known quantum secret sharing protocols polarization entangled photon pairs are used with a source capable to generate a multitude of different polarization states.

It is an object of the present invention to provide an improved, more flexible and more robust and cost-efficient method and system of quantum key distribution for quantum secret sharing.

According to the present invention, a method for quantum key distribution for quantum secret sharing is provided according to claim 1.

This object is achieved by a method for quantum key distribution for quantum secret sharing, comprising an entangled photon source and two receivers, comprising the steps

i) generation of time-energy entangled photon pairs in an entangled photon source, whereby the entangled photon source comprises a laser and a non-linear element, whereby each entangled photon pair comprises a signal photon and an idler photon;
ii) transmission of the signal photons to a first receiver and the idler photons to a second receiver;
iii) measurement of the signal and idler photons in an unbalanced Mach-Zehnder interferometer or an unbalanced Michelson interferometer at each receiver and generation of a key.

According to the invention, the generation of the time-energy entangled photon pairs in step i) is phase modulated, and/or
the measurement of the time-energy entangled photon pairs in step ii) at the first receiver and/or the second receiver is phase modulated.

The object is further achieved by a system for quantum key distribution for quantum secret sharing, comprising an entangled photon source and two receivers,

whereby the entangled photon source comprises a laser and a non-linear element in order to generate time-energy entangled photon pairs, and
whereby the source is connected via a quantum channel (5) with the first receiver and the second receiver each, and
whereby the receivers comprise an unbalanced Mach-Zehnder interferometer or an unbalanced Michelson interferometer in order to measure time-energy entangled photon pairs.

According to the invention, the source comprises in addition a phase modulator, and/or
the unbalanced Mach-Zehnder interferometer or the unbalanced Michelson interferometer of the first receiver comprises a phase modulator, and/or the unbalanced Mach-Zehnder interferometer or the unbalanced Michelson interferometer the second receiver comprises a phase modulator.

The advantage of the inventive method and the inventive system is the generation of time-energy entangled photon pairs in different states by the phase modulation in the source and/or the measurement of time-energy entangled photon pairs in different bases by the phase modulation at the receivers. The inventive method and the inventive system can be used for a quantum key distribution with quantum secret sharing. The advantage of time-energy entangled photon pairs is the robustness to long-distance quantum communication compared to polarization and/or frequency entangled photon pairs due to polarization-dependent loss and dispersion.

In a preferred embodiment, the phase modulation in step i) is realized by a phase modulation of a laser beam of the laser in the entangled photon source or by a phase modulation of the signal photon and/or idler photon in the entangled photon source.

In a preferred embodiment, the phase modulator in the source is arranged between the laser and the non-linear element, or is arranged in an arm of the unbalanced Mach-Zehnder interferometer or unbalanced Michelson interferometer in the entangled photon source. By the phase modulation of the laser beam, the phase of the laser beam is transferred to the signal and idler photon by the conservation of energy and momentum, preferably by a non-linear process in the non-linear element.

In a preferred embodiment, the phase modulator in the first receiver and/or in the second receiver is arranged in an arm of the unbalanced Mach-Zehnder interferometer or unbalanced Michelson interferometer at the first receiver and/or in the second receiver. In a preferred embodiment, the phase modulation in step iii) is realized by a phase modulation in one arm of the unbalanced Mach-Zehnder interferometer or the unbalanced Michelson interferometer at the first receiver and/or in the second receiver.

In the following the unbalanced Mach-Zehnder interferometer or unbalanced Michelson interferometer are also called unbalanced interferometer.

In a preferred embodiment, the phase modulator in the source is an electro optical modulator between the laser and the non-linear element in the source and/or a piezo stage in the unbalanced interferometer of the source, preferably in the long arm of the unbalanced interferometer in the source. In a preferred embodiment, the phase modulator in the first receiver and/or in the second receiver is an electro optical and/or a piezo stage in the unbalanced interferometer, preferably in the long arm of the unbalanced interferometer in the first receiver and/or the second receiver.

In a preferred embodiment, the phase modulation applied to the optical field of the laser beam and/or the signal photon and/or the idler photon modulates its absolute value of the phase, preferably by 0, or $\pi$, more preferably by 0, $\frac{1}{2}\pi$, $\pi$, or $\frac{3}{2}\pi$.

In a preferred embodiment, the phase modulation is random, preferably random out of the values 0, or $\pi$, more preferably out of the values 0, $\frac{1}{2}\pi$, $\pi$, or $\frac{3}{2}\pi$. In a preferred embodiment, the phase modulation is in a predefined sequence, preferably the source and the receivers agreed on the predefined sequence, preferably out of the values 0, or $\pi$, more preferably out of the values 0, $\frac{1}{2}\pi$, $\pi$, or $\frac{3}{2}\pi$. The advantage of a random phase modulation is the additional security for the key generation. The advantage of the predefined sequence is that the source and the receiver can agree in advance on the modulation.

In a preferred embodiment, the repetition rate of the modulation is equal to or higher than the free spectral range (FSR) of the unbalanced Mach-Zehnder interferometer or the unbalanced Michelson interferometer at the first and/or the second receiver. The free spectral range (FSR) is the inverse of the time delay difference between the short and long paths of the interferometer. In a preferred embodiment, the repetition rate defines a time window $\tau$ with constant phase, preferably the time window $\tau$ is called a time bin.

In a preferred embodiment, for each time window $\tau$ randomly or predefined a fixed value of phase modulation is applied to the optical field of the laser beam and/or the signal photon and/or the idler photon, whereby preferably the fixed phase value is out of 0, $\frac{1}{2}\pi$, $\pi$, or $\frac{3}{2}\pi$.

In a preferred embodiment, the time window $\tau$ is in the range of 10 ps to 100 ns, preferably in the range of 100 ps to 10 ns.

In a preferred embodiment, in each time window $\tau$ time-energy entangled photon pairs in a specific state can be generated by the modulation in the source or a time energy entangled photon pairs can be measured in a specific base by the modulation at the receivers, whereby the specific state and/or the specific base depends on the phase modulation, preferably depends on the fixed value of the phase modulation. In a preferred embodiment, by the phase modulation in the source different entangled photon states are generated, and/or by the phase modulation at the first receiver and/or second receiver the entangled photon pairs are measured in different bases.

In a preferred embodiment, the phase modulation of 0, $\frac{1}{2}\pi$, $\pi$, or $\frac{3}{2}\pi$ generate a different state each, whereby the state or the base of the phase modulation of $\frac{1}{2}\pi$, and/or $\frac{3}{2}\pi$ correspond to a mutually unbiased state or base to the phase modulation of 0 and/or $\pi$.

In a preferred embodiment, the different states are bell states of time-energy entangled photon pairs, preferably are bell states for the phase modulation with the value 0 and $\pi$.

In a preferred embodiment, the bell states are

$$\psi_{\pm} = \frac{1}{\sqrt{2}}\left(|S_s S_i\rangle \pm e^{i\varphi}|L_s L_i\rangle\right)$$

with L as long path and S as short path of the signal of the signal photon s and the idler photon i, with a phase modulation with the value 0 and $\pi$.

In a preferred embodiment, $m$ time window $\tau$ form a time frame T, with $m$ = 1,2,3, ....

In a preferred embodiment, a time-energy entangled photon pair is generated in each time window $\tau$ or a time-energy entangled photon pair is generated only in a part of the $m$ time windows $\tau$. In the case that only in a part of the $m$ time windows $\tau$ time-energy entangled photon pairs are generated, the quantum key can be generated by averaging multiple time frames T with the same phase modulation pattern.

In a preferred embodiment, the laser of the entangled photon source generates a laser beam and the non-linear element is pumped by the laser beam in order to generate photon pairs. In a preferred embodiment, the laser beam is a pulsed laser beam or a continuous wave laser beam.

In a preferred embodiment, the laser of the source is a pulsed laser and the source comprises an unbalanced Mach-Zehnder interferometer or an unbalanced Michelson interferometer in order to generate time-energy entangled photon pairs. In a preferred embodiment, the unbalanced Mach-Zehnder interferometer or the unbalanced Michelson interferometer of the source is arranged between the laser and the non-linear element. In a preferred embodiment the unbalanced Mach-Zehnder interferometer of the source is a Franson interferometer. In a preferred embodiment, the unbalanced Mach-Zehnder interferometer or the unbalanced Michelson interferometer of the source generates so-called passive mode time-energy entangled photon pairs. In a preferred embodiment, the free spectral range of the unbalanced Mach-Zehnder interferometer or an unbalanced Michelson interferometer is the free spectral range of the unbalanced Mach-Zehnder interferometer of the first receiver and/or second receiver.

In a preferred embodiment, the pulsed laser of the source generates a pulsed laser beam with a repetition rate of the time window $\tau$ or lower.

In a preferred embodiment, the laser of the source is a continuous wave laser pumping the non-linear element in order to generate time-energy entangled photon pairs. In a preferred embodiment, the relative phase of the pump laser beam is constant and set to zero. This is possibly by using laser with a high coherence time. The advantage of this embodiment is, that the source does not rely on a trigger for the generation of a pulsed laser beam.

In a preferred embodiment, the non-linear element is a non-linear waveguide or non-linear crystal, preferably in order to generate photon pairs by a nonlinear process, more preferably by spontaneous parametric down conversion or spontaneous four wave mixing.

In a preferred embodiment, the signal photon and the idler photon are wavelength degenerated. That means the signal photon and the idler photon of an entangled photon pair comprise different wavelength. In a preferred embodiment, the signal photon and the idler photon are routed accordingly to their wavelength to the first receiver and the second receiver, preferably the signal photon is routed to the first receiver and the idler photon is routed to the second receiver. In a preferred embodiment, the routing is realized by a wavelength sensitive means arranged in the source, preferably by a wavelength-division-multiplexer, more preferably by a grating or a dichroic mirror.

In a preferred embodiment, the measurement in step iii) is realized by quantum interference in the unbalanced Mach-Zehnder interferometer or the unbalanced Michelson interferometer and a detection of the interference signal behind an output of the unbalanced Mach-Zehnder interferometer or the unbalanced Michelson interferometer.

In a preferred embodiment the unbalanced Mach-Zehnder interferometer at the first receiver and/or the second receiver is a Franson interferometer.

In a preferred embodiment, the quantum interference is dependent on the phase of the source, and/or the phase of the first receiver, and/or on the phase of the second receiver.

In a preferred embodiment, the quantum interference is dependent on the relative phase of subsequent photons of subsequent time windows $\tau$, preferably dependent on $\varphi P_m - \varphi P_{m-1}$, and/or $\varphi A_m - \varphi A_{m-1}$, and/or $\varphi B_m - \varphi B_{m-1}$.

In a preferred embodiment, the two receivers create a key bit from the phase differences between two subsequent time-energy entangled photon pairs.

In a preferred embodiment, at each receiver the interference of two subsequent time windows $\tau$ or time-bins is measured. This is realized by the different path length of the short and the long arm of the unbalanced interferometer at the first receivers and/or the second receiver.

In a preferred embodiment, the interference depends on the relative phase of the photons in subsequent, interfered time windows $\tau$. This interference occurs as long as the delay time of the unbalanced interferometer is smaller than the coherence time of the pump field and bigger than the individual coherence time of the down-converted photons (to discard first order interference).

In a preferred embodiment, the quantum interference is a sinusoidal curve dependent on the phase of the source, and/or the phase of the first receiver, and/or on the phase of the second receiver.

In a preferred embodiment, the quantum interference follows the function $C = 1 - \sin(\varphi P + \varphi A + \varphi B)$, preferably for a spontaneous parametric down conversion source, or follows the function $C = 1 - \sin(-2\varphi P + \varphi A + \varphi B)$, preferably for a spontaneous four-wave mixing source, with $\varphi P$ as the phase of the source, $\varphi A$ as the phase of the first receiver, $\varphi B$ as the phase of the second receiver. In a preferred embodiment, for $\varphi A = \varphi B = 0$ the phase is based only on the phase in the source.

In a preferred embodiment, the detectors are single photon detectors, preferably in order to enable a discrete variable detection of time-energy entangled photon pairs.

In a preferred embodiment, the unbalanced Mach-Zehnder interferometer or the unbalanced Michelson interferometer of the first receiver and the second receiver are identical.

In a preferred embodiment, the unbalanced Mach-Zehnder interferometer at the first receiver and the second receiver are Franson interferometers, preferably an unbalanced Mach-Zehnder interferometer with a phase modulator, more preferably unbalanced but identical at both receivers. The Franson setup with two Franson interferometers is based on a source sending out time-correlated photons at unknown moments in time. These travel through analysis stations consisting of unbalanced (but identical) Mach-Zehnder interferometers with variable phases $\varphi_A$ and $\varphi_B$ in the long interferometer arm by two phase modulators. Each Franson interferometer has a path difference that is large enough to prohibit first-order interference. Identical means here, that the two Mach-Zehnder interferometers at the first and second receiver are identical, or at least as identical as possible, that means the path-difference (repetition intended) should be smaller than the coherence time of the individual photons so that the events of both photons taking the long path and both photons taking the short path are indistinguishable.

For $\varphi A + \varphi B = 0$ of the phases in the Franson interferometer of the first receiver and the second receiver coincidences are detected between the two receivers. There will be no interference if one photon takes the long path and the other takes the short path of the unbalanced interferometer because then the emission time can be calculated as the early detection time minus the short path length divided by c. When this happens the relative emission time (i.e. relative time and phase ($\varphi$)) will become known. When both photons take the same path in the Franson interferometer, the relative emission time remains unknown and enables the interference. The interference is not visible as a change in output intensity, as in first-order interference, but instead in the correlation of the outputs at the two receivers.

Given coincident detection, if the total phase modulation at the first receiver and the second receiver are $\varphi A + \varphi B = 0$, then a photon emerging in the +1 detection channel (first output port of the unbalanced interferometer) at the first receiver is always accompanied by a photon emerging in the +1 channel at the second receiver, and the same for the -1 channels. $\varphi A$ and $\varphi B$ are the phases of the unbalanced Mach-Zehnder interferometer at the first receiver and the second receiver which can be changed by phase modulators. Therefore, when a measurement has been made at one analysis station, the result can be used to predict what port the photon will emerge from at the remote analysis station whenever $\varphi A + \varphi B = 0$. Given an ideal unbalanced interferometer at the two receivers, Franson interference perfectly matches the theory of a time-energy entanglement via biphoton interference.

In a preferred embodiment, the key generation is realized by a quantum key distribution protocol for time-energy entangled photon pairs, preferably by a quantum key distribution protocol with a quantum secret sharing QSS protocol.

Quantum secret sharing (QSS) means here, that by the phase modulation in the source different states of time-energy entangled states are generated, whereby this information is needed at the two receivers to enable a key generation.

The above and other aspects, features and advantages of the present invention will become more apparent from the following detailed description when taken in conjunction with the accompanying drawings.

Brief Description of the Drawings:

Fig. 1: schematic diagram of inventive system for quantum key distribution for quantum secret sharing;

Fig. 2: schematic diagram of the source of Fig. 1 and the phase, power, and spectral intensity of the laser beam bevor and after a phase modulation for a continuous wave laser;

Fig. 3: first and second receiver from Fig. 1 and the corresponding coincidence rate of the detectors;

Fig. 4: an example of a phase modulation and the corresponding coincidence detections.

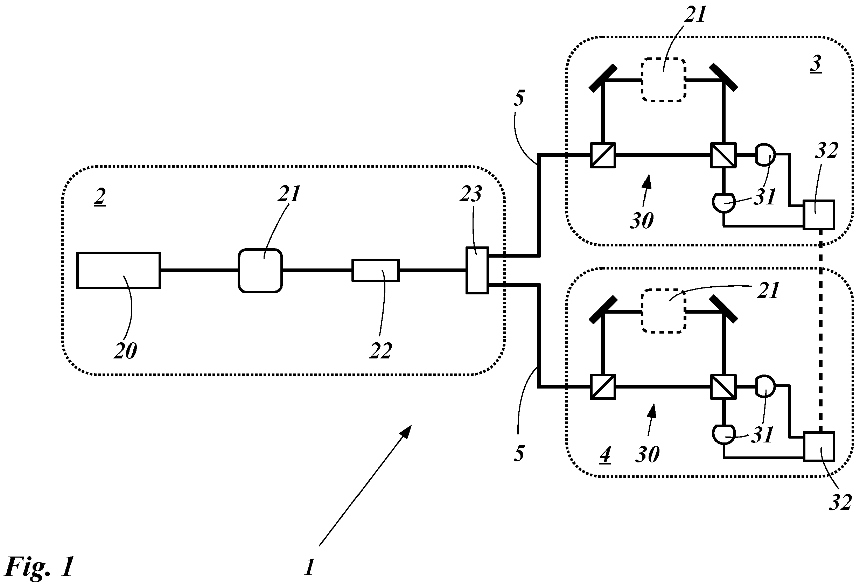

Fig. 1 shows an embodiment of the inventive system for quantum key distribution for quantum secret sharing comprising an entangled photon source 2, a first receiver 3, and a second receiver 4. The first receiver 3 and the second receiver 4 are connected via a quantum channel 5 each with the entangle photon source 2.

The entangled photon source 2 comprises a laser 20, which is in the example of Fig. 1 a continues wave laser, a phase modulator 21, a non-linear element 22, and a wavelength sensitive means 23.

The laser 20 generates in the example of Fig. 1 a continues wave laser beam which is guided via the phase modulator 21 to the non-linear element 22. The phase modulator 21 can be for example an electro optical modulator receiving an electrical signal in order to modulate the laser beam by its absolute value of the phase by 0, , $\pi$, or $\frac{3}{2}\pi$.

The phase of the continuous wave laser beam is phase modulated by the phase modulator 21. The non-linear element 22 is pumped by the phase modulated continues wave laser beam in order to generate photon pairs with a signal photon and an idler photon each. By the phase modulation of the laser beam, the phase of the laser beam is transferred to the signal and idler photon by the conservation of energy and momentum by a non-linear process in the non-linear element 22. By the unknown generation in time of the signal and idler photon in the non-linear element 22 by the continuous wave laser beam time-energy entangled photon pairs are generated. In a different embodiment a pulsed laser 20 and an unbalanced Mach-Zehnder interferometer can be used in order to produce two pump laser beams, a first and a second delayed pump beam, whereby in this embodiment, the time-energy entangled photon pairs are generated in the non-linear element 22 by the unknown generation in time of the photon pair in the non-linear element 22 by the first or the second pump beam. The transmission of the phase from the pump beam to the entangled photon pairs takes place in the same way as the continuous laser beam.

In the example of fig. 1 the entangled photon pairs are wavelength degenerated, that means the signal photon and the idler photon of each entangled photon pair comprise different wavelength. The signal photon of each pair is routed by a wavelength sensitive means 23 via a first quantum channel 5 to the first receiver 3 and the idler photon of each pair is routed via a second quantum channel 5 by the wavelength sensitive means 23 to the second receiver 4. In the example of Fig. 1 with only two receivers, the wavelength sensitive means 23 can be a dichroic mirror. In addition, the wavelength sensitive means 23 can block the pump laser beam, or an additional filter to block the pump laser beam is arranged in front of the wavelength sensitive means 23.

The first receiver 3 and the second receiver 4 comprise in the example of Fig. 1 the same components, an unbalanced Mach-Zehnder interferometer 30 to measure the time-energy entangled photon pair, two single photon detectors 31 behind the outputs of the unbalanced Mach-Zehnder interferometer 30, and an electronic 32 used to register the detection and the time of the detection of single photons at each receiver and to communicate with the other receiver in order to generate a key by a quantum key distribution protocol or a quantum secret sharing protocol.

The unbalanced Mach Zehnder interferometer 30 of the first receiver 3 and the second receiver 4 comprise two beam splitter and two mirrors in order to form a short arm and a long arm as depicted in Fig. 1. Behind the two output modes of the second beam splitter two single photon detectors 31 are arranged. The two unbalanced Mach Zehnder interferometers 30 of the first receiver 3 and the second receiver 4 are in the example of Fig. 1 two Franson interferometers measuring and detecting the time-energy entangled photon pairs in known manner.

As indicated by the dashed line of the phase modulators 21 in the first receiver 3 and the second receiver 4, this phase modulators 21 are optional for the case that not only the generation of the time-energy entangled photon pairs in the source 2 is modulated, but also the measurement of the time-energy entangled photon pairs is modulated at the receivers. By the additional modulation in the receivers a higher security level in a quantum secret sharing protocol can be achieved. In the case of the phase modulator 21 only in the source, the two unbalanced Mach Zehnder interferometers 30 are two Franson interferometers. It is also possible, in a further embodiment, that only the two phase modulators 21 at the first receiver 3 and the second receiver 4 are arranged in the setup, without a phase modulator 21 in the source 2. Also in this embodiment, a quantum key can be generated by a modulation of the phases at the receivers with a corresponding quantum secret sharing protocol.

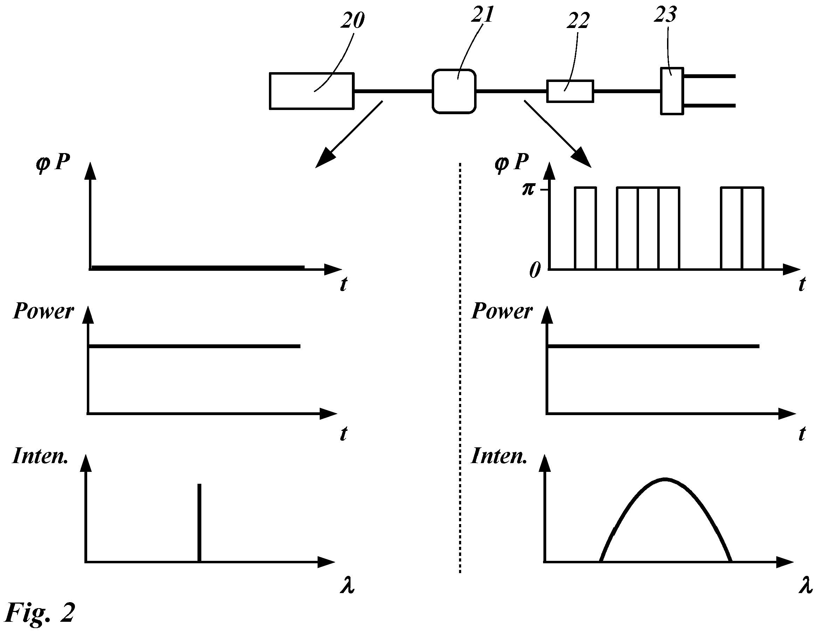

Fig. 2 shows the source 2 of Fig. 1 and the phase, power, and spectral intensity of the continuous laser beam before (left diagrams) and after (right diagrams) a phase modulation. Because of the high coherence time of the continuous wave laser 20, its relative phase before modulation is considered constant and set to zero. The phase modulation applied to the optical field modulates the absolute value of the phase of the laser beam from either 0, or $\pi$ in the example of Fig. 2. The phase of the pump is transferred to signal and idler photons of the entangled photon pairs by the conservation of energy and momentum, assuming that the digital signal applied to the phase modulator 21 and the corresponding optical bandwidth generated is lower than the phase matching of the non-linear element 22.

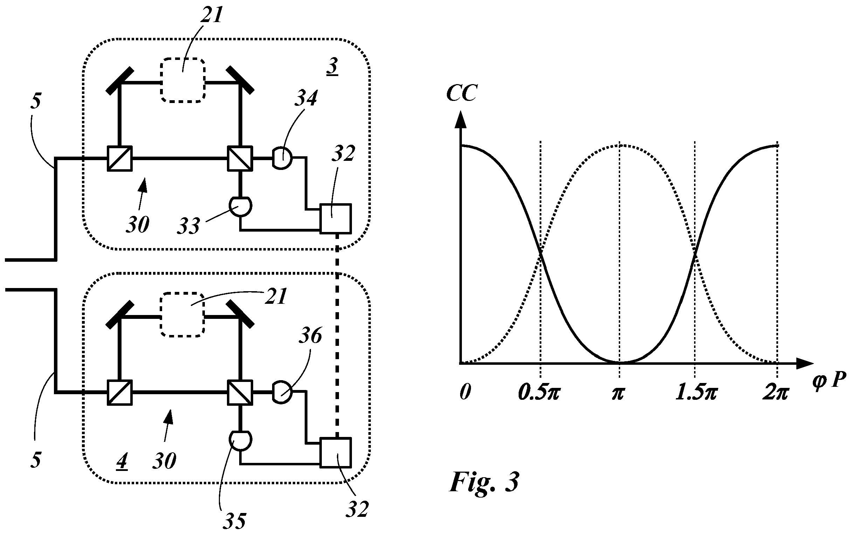

Fig. 3 shows the first and second receiver from Fig. 1 and the corresponding coincidence rate of the detectors from Fig. 1 in the case of $\varphi A + \varphi B = 0$ and a phase modulation in the source 2. In this case, the two Mach-Zehnder interferometers 30 at both receivers are unbalanced but identical at both receivers. The Franson setup with two Franson interferometers is based on a source 2 sending out time-correlated photons at unknown moments in time. These travel through the unbalanced (but identical) Mach-Zehnder interferometers 30. Each Franson interferometer has a path difference that is large enough to prohibit first-order interference. Identical means here, that the two Mach-Zehnder interferometers 30 at the first and second receiver are identical, or at least as identical as possible, that means the path-difference (repetition intended) should be smaller than the coherence time of the individual photons so that the events of both photons taking the long path and both photons taking the short path are indistinguishable.

For $\varphi A + \varphi B = 0$ of the phases in the Franson interferometer of the first receiver 3 and the second receiver 4 coincidences are detected between the two receivers as shown in Fig. 3. There will be no interference if one photon of an entangled photon pair at the first receiver 3 takes the long path and the other photon of an entangled photon pair at the second receiver 4 takes the short path of the unbalanced interferometer because then the emission time can be calculated as the early detection time minus the short path length divided by c. When this happens the relative emission time (i.e. relative time and phase ($\varphi$)) will become known. When both photons of an entangled photon pair take the same path in the Franson interferometer, the relative emission time remains unknown and enables the interference. The interference is not visible as a change in output intensity, as in first-order interference, but instead in the correlation of the outputs at the two receivers.

As shown in Fig. 3, the detectors 31 are arranged in such way, that at the first receiver 3 a first detector 33 and a second detector 34 are arranged behind the two output modes of the beam splitter. In the same way, at the second receiver 4 a third detector 34 and a fourth detector 36 are arranged at the two output modes of the beam splitter at the second receiver 4. Given coincident detection, if the total phase modulation at the first receiver 3 and the second receiver 4 are $\varphi A + \varphi B = 0$, then a photon emerging at the first detector 33 is always accompanied by a photon emerging at the third detector 35, and the same for the second detector 34 and the

fourth detector 36. $\varphi A$ and $\varphi B$ are the phases of the unbalanced Mach-Zehnder interferometer 30 at the first receiver 3 and the second receiver 4 which can be changed by phase modulators 21. Therefore, when a measurement has been made at one receiver, the result can be used to predict at what port the second photon of an entangled photon pair will emerge at the other receiver whenever $\varphi A + \varphi B = 0$. Given an ideal unbalanced interferometer at the two receivers 3 and 4, Franson interference perfectly matches the theory of a time-energy entanglement via biphoton interference.

The dashed line in the diagram of Fig. 3 shows the coincidence rate detected at the first detector 33 and the third detector 35 while changing the phase in the source 2. The continuous line in the diagram of Fig. 3 shows the coincidence rate detected at the second detector 34 and the fourth detector 36 while changing the phase in the source 2.

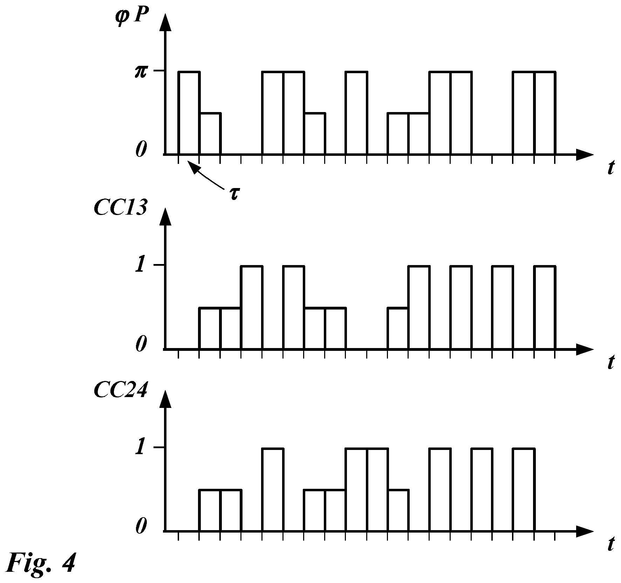

Fig. 4 shows in the upper diagram the phase modulation in the source. In the example of Fig. 4 the phase modulation in each time window $\tau$ is constant. For each time window $\tau$ random a phase modulation of 0, $\frac{1}{2}\pi$, or $\pi$ is applied. Taking the coincidence behavior of Fig. 3 into account, the resulting detection probability of a coincidence of the first detector 33 and the third detector 35 are depicted in the middle diagram, and the resulting detection probability of a coincidence of the second detector 34 and the fourth detector 36 are depicted in the lower diagram. By the detection of a coincidence or no coincidence between two detectors a quantum key with the bits 1 and 0 can be generated. The phase modulation of $\frac{1}{2}\pi$ leads to a 50/50 chance of detecting a coincidence or not, comparable to a measurement in second a mutually unbiased measurement base.

Reference signs:

1    system for quantum key distribution for quantum secret sharing
2    entangled photon source
3    first receiver
4    second receiver
5    quantum channel

20    laser
21    phase modulator
22    non-linear element
23    wavelength sensitive means

30    unbalanced Mach-Zehnder interferometer
31    detector
32    electronic

33    first detector
34    second detector
35    third detector
36    fourth detector

## Claims

1. Method for quantum key distribution for quantum secret sharing, comprising an entangled photon source (2) and two receivers,

   comprising the steps

      i) generation of time-energy entangled photon pairs in an entangled photon source (2), whereby the source (2) comprises a laser (20) and a non-linear element (22), whereby each entangled photon pair comprises a signal photon and an idler photon;
      ii) transmission of the signal photons to a first receiver (3) and the idler photons to a second receiver (4);
      iii) measurement of the signal and idler photons in an unbalanced Mach-Zehnder interferometer (30) or an unbalanced Michelson interferometer at each receiver and generation of a key,

   **characterized in that**
   the generation of the time-energy entangled photon pairs in step i) is phase modulated, and/or
   the measurement of the time-energy entangled photon pairs in step ii) at the first receiver (3) and/or the second receiver (4) is phase modulated.

2. Method according to claim 1,
   **characterized in that**
   the two receivers create a key bit from the phase differences between two subsequent time-energy entangled photon pairs, preferably the key generation is realized by a quantum key distribution protocol for time-energy entangled photon pairs, preferably by a quantum key distribution protocol with a quantum secret sharing QSS protocol.

3. Method according one of the claims 1 or 2,

   **characterized in that**
   the phase modulation in step i) is realized by a phase modulation of a laser beam of the laser (20) in the entangled photon source (2) or by a phase modulation of the signal photon and/or idler photon in the entangled photon source (2), preferably by a phase modulator (21), and/or
   the phase modulation in step iii) is realized by a phase modulation in one arm of the unbalanced Mach-Zehnder interferometer (30) or the unbalanced Michelson interferometer at the first receiver (3) and/or in the second receiver (4), preferably by a phase modulator (21).

4. Method according one of the claims 1 to 3,

   **characterized in that**
   the phase modulation applied to the optical field of the laser beam and/or
   the signal photon and/or the idler photon modulates its absolute value of the phase, preferably by 0, or $\pi$, more preferably by 0, $\frac{1}{2}\pi$, $\pi$, or $\frac{3}{2}\pi$.

5. Method according one of the claims 1 to 4,
   **characterized in that**
   the phase modulation is random, or the phase modulation is in a predefined sequence.

6. Method according one of the claims 1 to 5,
   **characterized in that**
   the repetition rate of the modulation is equal to or higher than the free spectral range (FSR) of the unbalanced Mach-Zehnder interferometer (30) or the unbalanced Michelson interferometer at the first and/or the second receiver (4), and the repetition rate defines a time window $\tau$ with constant phase.

7. Method according to claim 6,
   **characterized in that**
   for each time window $\tau$ randomly or predefined a fixed value of phase modulation is applied to the optical field of the laser beam and/or the signal photon and/or the idler photon, whereby preferably the fixed phase value is out of 0, $\frac{1}{2}\pi$, $\pi$, or $\frac{3}{2}\pi$.

8. Method according one of the claims 6 or 7,
   **characterized in that**
   in each time window $\tau$ time-energy entangled photon pairs in a specific state is generated by the modulation in the source (2), or a time energy entangled photon pairs is measured in a specific base by the modulation at the receivers.

9. Method according one of the claims 1 to 8,
   **characterized in that**
   the phase modulation of 0, $\frac{1}{2}\pi$, $\pi$, or $\frac{3}{2}\pi$ generate a different state each, whereby the state or the base of the phase modulation of $\frac{1}{2}\pi$, and/or $\frac{3}{2}\pi$ correspond to a mutually unbiased state or base to the phase modulation of 0 and/or $\pi$.

10. Method according one of the claims 1 to 9,
    **characterized in that**
    the laser (20) of the source (2) generates a pulsed laser beam with a repetition rate of the time window $\tau$ or lower, or laser (20) of the source (2) generates a continuous wave laser beam.

11. Method according one of the claims 1 to 10,
    **characterized in that**
    the non-linear element (22) is pumped by the laser (20) and generates photon pairs by a non-linear process, more preferably by spontaneous parametric down conversion or spontaneous four wave mixing.

12. Method according one of the claims 1 to 11,
    **characterized in that**
    the measurement in step iii) is realized by quantum interference in the unbalanced Mach-Zehnder interferometer (30) or the unbalanced Michelson interferometer and a detection of the interference signal behind an output of the unbalanced Mach-Zehnder interferometer (30) or the unbalanced Michelson interferometer.

13. Method according to claim 12,
    **characterized in that**
    the interference depends on the relative phase of the photons in subsequent, interfered time windows $\tau$.

14. System (1) for quantum key distribution for quantum secret sharing, comprising an entangled photon source (2) and two receivers,

    whereby the source (2) comprises a laser (20) and a non-linear element (22) in order to generate time-energy entangled photon pairs, and
    whereby the source (2) is connected via a quantum channel (5) with the first receiver (3) and the second receiver (4) each, and
    whereby the receivers comprise an unbalanced Mach-Zehnder interferometer (30) or an unbalanced Michelson interferometer in order to measure time-energy entangled photon pairs,
    **characterized in that**
    the source (2) comprises in addition a phase modulator (21), and/or the unbalanced Mach-Zehnder interferometer (30) or the unbalanced Michelson interferometer of the first receiver (3) comprises a phase modulator (21), and/or
    the unbalanced Mach-Zehnder interferometer (30) or the unbalanced Michelson interferometer the second receiver (4) comprises a phase modulator (21).

**15.** System (1) according to claim 14,

**characterized in that**
the phase modulator (21) in the source (2) is an electro optical modulator between the laser (20) and the non-linear element (22) in the source (2) and/or a piezo stage in the unbalanced interferometer of the source (2), preferably in the long arm of the unbalanced interferometer in the source (2), and/or
the phase modulator (21) in the first receiver (3) and/or in the second receiver (4) is an electro optical and/or a piezo stage in the unbalanced interferometer, preferably in the long arm of the unbalanced interferometer in the first receiver (3) and/or the second receiver (4).

Fig. 1

Fig. 2

Fig. 3

Fig. 4

Europäisches Patentamt

European Patent Office

Office européen des brevets

# EUROPEAN SEARCH REPORT

Application Number

EP 22 17 2489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM JIN-HUN ET AL: "Long-range distribution of high-quality time-bin entangled photons for quantum communication", JOURNAL OF THE KOREAN PHYSICAL SOCIETY, THE KOREAN PHYSICAL SOCIETY, SEOUL, vol. 80, no. 3, 15 December 2021 (2021-12-15), pages 203-213, XP037690383, ISSN: 0374-4884, DOI: 10.1007/S40042-021-00342-5 [retrieved on 2021-12-15] | 1,3-5,7, 9,11,12, 14,15 | INV. H04L9/08 H04B10/70 |
| Y | * last part of section 3.2; page 212; figures 1,2,5,7 * ----- | 2,6,8, 10,13 | |
| Y | HIROKI TAKESUE ET AL: "Quantum secret sharing based on modulated high-dimensional time-bin entanglement", ARXIV.ORG, CORNELL UNIVERSITY LIBRARY, 201 OLIN LIBRARY CORNELL UNIVERSITY ITHACA, NY 14853, 23 June 2006 (2006-06-23), XP080243162, DOI: 10.1103/PHYSREVA.74.012315 * pages 3-7 * ----- | 2,6,8, 10,13 | |
| A | GB 2 405 294 A (TOSHIBA RES EUROP LTD [GB]) 23 February 2005 (2005-02-23) * page 6, paragraphs 2,3 * * figure 6 * ----- | 1-15 | |

TECHNICAL FIELDS SEARCHED (IPC)

H04L
H04B

-/--

The present search report has been drawn up for all claims

| Place of search | Date of completion of the search | Examiner |
|---|---|---|
| Munich | 10 October 2022 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 4 277 197 A1**

Europäisches
Patentamt

European
Patent Office

Office européen
des brevets

# EUROPEAN SEARCH REPORT

Application Number

EP 22 17 2489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM JIN-HUN ET AL: "Quantum communication with time-bin entanglement over a wavelength-multiplexed fiber network", APL PHOTONICS, AMERICAN INSTITUTE OF PHYSICS, 2 HUNTINGTON QUADRANGLE, MELVILLE, NY 11747, vol. 7, no. 1, 25 January 2022 (2022-01-25), XP012263090, DOI: 10.1063/5.0073040 [retrieved on 2022-01-25] * figure 1 * ----- | 1,3-5,7, 9,11,12, 14,15 | |

TECHNICAL FIELDS SEARCHED (IPC)

The present search report has been drawn up for all claims

| Place of search | Date of completion of the search | Examiner |
|---|---|---|
| Munich | 10 October 2022 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 2489

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2022

| Patent document cited in search report | | Publication date | Patent family member(s) | | Publication date |
|---|---|---|---|---|---|
| GB 2405294 | A | 23-02-2005 | GB | 2405294 A | 23-02-2005 |
| | | | GB | 2419264 A | 19-04-2006 |
| | | | US | 2005100351 A1 | 12-05-2005 |

EPO FORM P0459

For more details about this annex : see Official Journal of the European Patent Office, No. 12/82